# EUROPEAN PATENT APPLICATION

(11) **EP 4 838 976 A1**
(43) Date of publication of application: **11.11.2026**
(21) Application number: 24916741.2
(22) Date of filing: 25.12.2024
(51) Int. Cl.: H04W 72/044

(54) **COMMUNICATION METHOD AND APPARATUS**

(30) Priority: 11.01.2024 CN 202410048453
(71) Applicant: Huawei Technologies Co., Ltd., Shenzhen, Guangdong 518129 (CN)
(72) Inventor: YU, Tianhang, Shenzhen Guangdong 518129 (CN); YANG, Ruonan, Shenzhen Guangdong 518129 (CN); QIAO, Yunfei, Shenzhen Guangdong 518129 (CN); WANG, Jun, Shenzhen Guangdong 518129 (CN)
(74) Representative: Maiwald GmbH
(86) International application number: PCT/CN2024/142509
(87) International publication number: WO 2025/148694

(57) **Abstract**

This application provides a communication method and apparatus, to improve data transmission efficiency in a beam tracking process. The method includes: A terminal device sends first indication information to a network device. The first indication information indicates that the terminal device is in the beam tracking process. The network device performs user scheduling on the terminal device based on the first indication information. According to this solution, the terminal device may notify, through the first indication information, the network device that the terminal device is in the beam tracking process, so that the network device can perform user scheduling based on the first indication information. This prevents negative impact on the user scheduling that occurs when the network device performs user scheduling based on uplink feedback information sent by the terminal device in the beam tracking process. Therefore, data transmission efficiency is improved.

## Description

### CROSS-REFERENCE TO RELATED APPLICATIONS

This application claims priority to Chinese Patent Application No. 202410048453.5, filed with the China National Intellectual Property Administration on January 11, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A non-terrestrial network (non-terrestrial network, NTN), such as satellite communication, has advantages such as wide coverage, long communication distance, high reliability, high flexibility, and high throughput, is not affected by geographical environments, climate conditions, or natural disasters, and has been widely applied to fields such as aeronautical communication, maritime communication, and military communication. Introducing satellites into the fifth generation mobile communication (5^{th} Generation, 5G) new radio (NR, New Radio) technology enables communication services in areas that terrestrial networks cannot easily cover, such as oceans and forests, improves reliability of 5G communication, for example, provides more stable and higher-quality communication services for trains, airplanes, and users on these transportation means, and further provides more data transmission resources to support a larger quantity of connections.

Due to a long distance and poor link budget of satellite communication, to satisfy requirements on high-throughput services such as broadband video transmission, a terminal device usually uses phased-array narrow beams to align with satellites, to improve a receive gain. For example, a width of a narrow beam ranges from 1° to 3°. When a vehicle-mounted phased-array terminal device moves at a high speed, a bumpy road, vehicle steering, or the like may cause rapid changes in a three-axis attitude, resulting in jitter of a beam direction. Because such jitter persists on an ongoing basis, continuous beam tracking is required. In existing cellular systems, data transmission is usually suspended during beam tracking and resumes only after the beams are stably aligned. However, in a communication scenario between the satellite and the vehicle-mounted phased-array terminal device, jitter is random and frequent, requiring frequent beam tracking. If data transmission is suspended during beam tracking, transmission efficiency becomes low. If data transmission is concurrently with beam tracking, the terminal device sends uplink feedback information to the satellite. Because link quality is unstable during beam tracking, user scheduling performed by the satellite based on the uplink feedback information may be negatively affected.

### SUMMARY

This application provides a communication method and apparatus, to improve data transmission efficiency in a beam tracking process.

According to a first aspect, this application provides a communication method. The method may be performed by a terminal device or a chip, a chip system, or a circuit located in the terminal device. The method may be implemented through the following steps: generating first indication information, where the first indication information indicates that the terminal device is in a beam tracking process; and sending the first indication information to a network device.

In the foregoing method, the terminal device may indicate, to the network device, that the terminal device is in the beam tracking process, so that the network device can learn a beam tracking state of the terminal device in a timely manner, and accurately perform user scheduling on the terminal device, thereby improving data transmission efficiency in the beam tracking process.

In a possible design, the first indication information further indicates a beam tracking stage that the terminal device is in.

According to the design, the terminal device may further indicate, through the first indication information, the beam tracking stage that the terminal device is in. For example, the beam tracking stage may include an initial stage of beam tracking, an intermediate stage of beam tracking, and a final stage of beam tracking. The network device may determine, through the first indication information, the beam tracking stage that the terminal device is in, so as to perform user scheduling based on the beam tracking stage that the terminal device is in, thereby improving accuracy of user scheduling.

In a possible design, the method further includes: sending uplink feedback information to the network device.

According to the design, the terminal device may generate the first indication information when needing to send the uplink feedback information to the network device, so that the network device can determine the beam tracking state of the terminal device in a timely manner when receiving the uplink feedback information and needing to perform user scheduling on the terminal device.

In a possible design, the sending the first indication information to the network device includes: sending the first indication information to the network device on a first resource, where the first resource is an uplink resource preconfigured by the network device for the terminal device, or the first resource is an uplink resource requested by the terminal device from the network device.

According to the design, the terminal device may send the first indication information through the preconfigured first resource or the first resource requested from the network device, to flexibly implement transmission of the first indication information.

In a possible design, the first indication information and the uplink feedback information are carried on a same uplink resource or different uplink resources.

In a possible design, the method further includes: sending second indication information to the network device, where the second indication information indicates the terminal device to send the first indication information after specified duration following the sending of the second indication information.

According to the design, the terminal device may notify the network device in advance that the first indication information is to be transmitted, and the first indication information is sent after the specified duration, so that the network device can determine a time at which the terminal device needs to occupy the first resource. When the terminal device does not occupy the first resource, the network device may further allocate the unused uplink resource to another user, to reduce a waste of resources.

According to a second aspect, this application provides a communication method. The method may be performed by a network device or a chip, a chip system, or a circuit located in the network device. The method may be implemented through the following steps: receiving first indication information sent by a terminal device, where the first indication information indicates that the terminal device is in a beam tracking process; and performing user scheduling on the terminal device based on the first indication information.

In the foregoing method, the terminal device may notify, through the first indication information, the network device that the terminal device is in the beam tracking process, so that the network device can perform user scheduling based on the first indication information. This prevents negative impact on the user scheduling that occurs when the network device performs user scheduling based on uplink feedback information sent by the terminal device in the beam tracking process. Therefore, data transmission efficiency is improved.

In a possible design, the performing user scheduling on the terminal device based on the first indication information includes: determining, based on the first indication information, a modulation and coding scheme corresponding to the terminal device.

According to the design, the network device may determine, based on the first indication information, that the terminal device is in the beam tracking process, and determine, based on the first indication information, the modulation and coding scheme corresponding to the terminal device, so that the determined modulation and coding scheme is more suitable for the beam tracking state of the terminal device, thereby improving the data transmission efficiency.

In a possible design, the determining, based on the first indication information, the modulation and coding scheme corresponding to the terminal device includes: determining a first modulation and coding scheme MCS index based on the first indication information, where the first MCS index is an MCS index used by the network device and the terminal device in next data transmission.

In a possible design, the determining the first modulation and coding scheme MCS index based on the first indication information includes: determining the first MCS index based on a second MCS index, where the second MCS index is an MCS index used in a previous data transmission process of the network device and the terminal device.

According to the design, when determining that the terminal device is in the beam tracking process, the network device may determine, based on the MCS index used in a previous data transmission process of the network device and the terminal device, an MCS index used in a next data transmission process, and does not adjust the MCS index by using the uplink feedback information, thereby reducing negative impact of the uplink feedback information in the beam tracking process on user scheduling.

In a possible design, the first indication information further indicates a beam tracking stage that the terminal device is in.

Before the performing user scheduling on the terminal device based on the first indication information, the method further includes: receiving the uplink feedback information sent by the terminal device.

The determining the first modulation and coding scheme MCS index based on the first indication information includes: determining, based on the first indication information, a first parameter corresponding to the beam tracking stage that the terminal device is in; and determining the first MCS index based on the first parameter, the second MCS index, and the uplink feedback information, where the second MCS index is an MCS index used in a previous data transmission process of the network device and the terminal device.

Optionally, the first parameter indicates a confidence level of the uplink feedback information, or the first parameter may be understood as a weight value of the uplink feedback information when the network device performs user scheduling by using the uplink feedback information.

According to the design, the first indication information may further indicate the beam tracking stage that the terminal device is in. Because beam tracking is a gradually converging process, the network device may perform user scheduling by using the uplink feedback information with a different weight value based on a different beam tracking stage that the terminal device is in, thereby improving accuracy of user scheduling.

In a possible design, the receiving the first indication information sent by the terminal device includes: receiving the first indication information sent by the terminal device on a first resource, where the first resource is an uplink resource preconfigured by the network device for the terminal device, or the first resource is an uplink resource requested by the terminal device from the network device.

In a possible design, the first indication information and the uplink feedback information are carried on a same uplink resource or different uplink resources.

In a possible design, the method further includes: receiving second indication information sent by the terminal device, where the second indication information indicates the terminal device to send the first indication information after specified duration following the sending of the second indication information.

According to the design, the terminal device may notify the network device in advance that the first indication information is to be transmitted, and the first indication information is sent after the specified duration, so that the network device can determine a time at which the terminal device needs to occupy the first resource. When the terminal device does not occupy the first resource, the network device may further allocate the unused uplink resource to another user, to reduce a waste of resources.

According to a third aspect, this application further provides a communication apparatus. The apparatus is a terminal device or a chip in the terminal device. The communication apparatus has a function of implementing any method provided in the foregoing first aspect. The communication apparatus may be implemented by hardware, or may be implemented by hardware executing corresponding software. The hardware or the software includes one or more units or modules corresponding to the foregoing function.

In a possible design, the communication apparatus includes a processor. The processor is configured to support the communication apparatus in performing a corresponding function of the terminal device in the foregoing method. The communication apparatus may further include a memory. The memory may be coupled to the processor, and stores program instructions and data that are necessary for the communication apparatus. Optionally, the communication apparatus further includes an interface circuit. The interface circuit is configured to support communication between the communication apparatus and a device such as a service satellite, for example, receiving and sending of data or a signal. For example, the communication interface may be a transceiver, a circuit, a bus, a module, or another type of communication interface.

In a possible design, the communication apparatus includes corresponding function modules respectively configured to implement the steps in the foregoing method. The function may be implemented by hardware, or may be implemented by hardware executing corresponding software. The hardware or the software includes one or more modules corresponding to the foregoing function.

In a possible design, a structure of the communication apparatus includes a processing unit (or a processing unit) and a communication unit (or a communication unit). These units may execute the corresponding function of the terminal device in the foregoing method example. For details, refer to the description in the method provided in the first aspect. Details are not described herein.

According to a fourth aspect, this application further provides a communication apparatus. The apparatus is a network device or a chip in the network device. The communication apparatus has a function of implementing any method provided in the foregoing second aspect. The communication apparatus may be implemented by hardware, or may be implemented by hardware executing corresponding software. The hardware or the software includes one or more units or modules corresponding to the foregoing function.

In a possible design, the communication apparatus includes a processor. The processor is configured to support the communication apparatus in performing a corresponding function of the network device in the foregoing method. The communication apparatus may further include a memory. The memory may be coupled to the processor, and stores program instructions and data that are necessary for the communication apparatus. Optionally, the communication apparatus further includes an interface circuit. The interface circuit is configured to support communication between the communication apparatus and a device such as a terminal device, for example, receiving and sending of data or a signal. For example, the communication interface may be a transceiver, a circuit, a bus, a module, or another type of communication interface.

In a possible design, the communication apparatus includes corresponding function modules respectively configured to implement the steps performed by the network device in the foregoing method. The function may be implemented by hardware, or may be implemented by hardware executing corresponding software. The hardware or the software includes one or more modules corresponding to the foregoing function.

In a possible design, a structure of the communication apparatus includes a processing unit (or a processing unit) and a communication unit (or a communication unit). These units may execute the corresponding function of the network device in the foregoing method example. For details, refer to the description in the method provided in the second aspect. Details are not described herein.

According to a fifth aspect, a communication apparatus is provided, including a processor and an interface circuit. The interface circuit is configured to receive a signal from another communication apparatus other than the communication apparatus and transmit the signal to the processor, or send a signal from the processor to another communication apparatus other than the communication apparatus. The processor is configured to implement the method in the foregoing first aspect and any possible design through a logic circuit or by executing code instructions.

According to a sixth aspect, a communication apparatus is provided, including a processor and an interface circuit. The interface circuit is configured to receive a signal from another communication apparatus other than the communication apparatus and transmit the signal to the processor, or send a signal from the processor to another communication apparatus other than the communication apparatus. The processor is configured to implement the method in the foregoing second aspect and any possible design through a logic circuit or by executing code instructions.

According to a seventh aspect, a computer-readable storage medium is provided. The computer-readable storage medium stores a computer program or instructions. When the computer program or the instructions are executed by a processor, the method in either of the first aspect and the second aspect and any possible design is implemented.

According to an eighth aspect, a computer program product storing instructions is provided. When the instructions are executed by a processor, the method in either of the first aspect and the second aspect and any possible design is implemented.

According to a ninth aspect, a chip system is provided. The chip system includes a processor, and may further include a memory, so as to implement the method in either of the first aspect and the second aspect and any possible design. The chip system may include a chip, or may include the chip and another discrete device.

According to a tenth aspect, a communication system is provided. The system includes the apparatus (such as the terminal device) according to the third aspect and the apparatus (such as the network device) according to the fourth aspect.

For a technical effect that can be achieved by the technical solution in any one of the third aspect to the tenth aspect, refer to the descriptions of technical effects that can be achieved by the technical solutions in the first aspect and the second aspect. Repeated parts are not described again.

### BRIEF DESCRIPTION OF DRAWINGS

FIG. 1 is a diagram of an architecture of a communication network according to an embodiment of this application;
FIG. 2 is a flowchart of a communication method according to an embodiment of this application;
FIG. 3 is a diagram of a structure of a communication apparatus according to an embodiment of this application; and
FIG. 4 is a diagram of a structure of a communication apparatus according to an embodiment of this application.

### DESCRIPTION OF EMBODIMENTS

To make objectives, technical solutions, and advantages of embodiments of this application clearer, embodiments of this application are further described in detail below with reference to the accompanying drawings. Terms "first" and "second" below in descriptions of embodiments of this application are merely used for the purpose of description, and cannot be construed as indicating or implying relative importance or implicitly indicating a quantity of indicated technical features. Therefore, a feature defined by "first" or "second" may explicitly or implicitly include one or more such features.

It should be understood that in embodiments of this application, "at least one" means one or more, and "a plurality of" means two or more. A term "and/or" is used to describe an association relationship between associated objects, and indicates that three relationships may exist. For example, "A and/or B" may represent the following cases: only A exists, both A and B exist, and only B exists, where A and B may be singular or plural. A character "/" generally indicates an "or" relationship between the associated objects. "At least one of the following items (pieces)" or a similar expression thereof refers to any combination of these items, including a single term (piece) or any combination of a plurality of items (pieces). For example, at least one (item) of a, b, or c may represent a, b, c, a and b, a and c, b and c, or a, b and c, where a, b, and c may be singular, or may be plural.

Ordinal numbers such as "first" and "second" mentioned in embodiments of this application are used to distinguish between a plurality of objects, and are not used to limit sizes, content, a sequence, a time sequence, a priority, importance, or the like of the plurality of objects. In addition, numbers of steps in embodiments described in this application are merely for distinguishing between different steps, and are not used to limit an order of the steps.

Moreover, terms "including" and "having" and any variations thereof in descriptions of this application are intended to cover non-exclusive inclusions. For example, a process, a method, a system, a product, or a device that includes a series of steps or units is not limited to the listed steps or units, and instead, optionally further includes another step or unit that is not listed, or optionally further includes another step or unit that is intrinsic to the process, method, product, or device.

It should be noted that in embodiments of this application, words such as "in an example" or "for example" are used to represent giving an example, an illustration, or a description. Any embodiment or design solution described as "in an example" or "for example" in embodiments of this application should not be explained as being preferred or having more advantages than another embodiment or design solution. Exactly, use of the phrase such as "in an example" or "for example" is intended to present a related concept in a specific manner.

A method and an apparatus provided in embodiments of this application are based on a same or similar technical concept. Because principles of resolving a problem through the method and the apparatus are similar, mutual reference may be made to implementations of the apparatus and the method. Repeated parts are not described again.

Some terms or concepts in embodiments of this application are explained and described below, to facilitate understanding of a person skilled in the art.

In embodiments of this application, a terminal device is a device with a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect to a person, an object, a machine, and the like, and may be widely used in various scenarios, for example, including but not limited to terminal devices in the following scenarios: cellular communication, device-to-device (device-to-device, D2D) communication, V2X, machine-to-machine/machine-type communication (machine-to-machine/machine-type communications, M2M/MTC), an internet of things (internet of things, IoT), virtual reality (virtual reality, VR), augmented reality (augmented reality, AR), industrial control (industrial control), self driving (self driving), telemedicine (remote medical), smart grid (smart grid), smart furniture, smart office, smart wearable, smart transportation, smart city (smart city), an unmanned aerial vehicle, and a robot. Currently, examples of some terminal devices are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in the internet of vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in smart home (smart home), a device-to-device (device-to-device, D2D) communication terminal device, a vehicle-to-everything (vehicle to everything, V2X) communication terminal device, a smart vehicle, an in-vehicle infotainment system (or referred to as a vehicle-mounted sending unit) (telematics box, T-box), a machine-to-machine/machine-type communication (machine-to-machine/machine-type communications, M2M/MTC) terminal device, an internet of things (internet of things, IoT) terminal device, and the like. For example, the terminal device may be a vehicle-mounted device, a whole device, a vehicle-mounted module, a vehicle, an on-board unit (on board unit, OBU), a roadside unit (roadside unit, RSU), a T-box, a chip, or a system-on-a-chip (system-on-a-chip, SoC). The chip or the SoC may be mounted in the vehicle, the OBU, the RSU, or the T-box. The wireless terminal in industrial control may be a camera, a robot, or the like. The wireless terminal in smart home may be a television, an air conditioner, a robot vacuum, a speaker, a set-top box, or the like. The terminal device may sometimes be referred to as a UE, a terminal, an access station, a UE station, a remote station, a wireless communication device, a mobile terminal (mobile terminal, MT), a user apparatus, or the like. For ease of description, an example in which the terminal device is the UE is used for description in embodiments of this application.

In embodiments of this application, a communication apparatus configured to implement a function of the terminal device may be a terminal device, or may be an apparatus that can support the terminal device in implementing the function, for example, a chip system. The apparatus may be installed in the terminal device. In technical solutions provided in embodiments of this application, the technical solutions provided in embodiments of this application are described by using an example in which the apparatus configured to implement the function of the terminal device is the terminal device.

A network device in embodiments of this application includes, for example, an access network device and/or a core network device. The access network device is a device with a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), an evolved third generation partnership project (3^{rd} generation partnership project, 3GPP) base station, an access node in a wireless fidelity (wireless fidelity, Wi-Fi) system, a wireless relay node, a wireless backhaul node, or the like. The base station may be a macro base station, a micro base station, a picocell base station, a small cell, a relay station, or the like. A plurality of base stations may support networks using a same access technology, or may support networks using different access technologies. The base station may include one or more co-located or non-co-located transmission reception points. The access network device may alternatively be a radio controller in a cloud radio access network (cloud radio access network, CRAN) scenario, a central unit (central unit, CU), and/or a distributed unit (distributed unit, DU). The access network device may alternatively be a server or the like. For example, a network device in a vehicle-to-everything (vehicle to everything, V2X) technology may be a road side unit (road side unit, RSU). An example in which the access network device is a base station is used for description below. The base station may communicate with the terminal device, or may communicate with the terminal device through a relay station. The terminal device may communicate with a plurality of base stations using different access technologies. The core network device is configured to implement functions such as mobility management, data processing, session management, and policy control and charging. Names of devices that implement core network functions in systems using different access technologies may be different. This is not limited in embodiments of this application. The fifth generation (the 5^{th} generation, 5G) mobile communication system is used as an example. The core network device includes an access and mobility management function (access and mobility management function, AMF), a session management function (session management function, SMF), a policy control function (policy control function, PCF), a location management function (location management function, LMF), a user plane function (user plane function, UPF), or the like.

In embodiments of this application, a communication apparatus configured to implement a function of the network device may be a network device, or may be an apparatus that can support the network device in implementing the function, for example, a chip system. The apparatus may be installed in the network device. In technical solutions provided in embodiments of this application, the technical solutions provided in embodiments of this application are described by using an example in which the apparatus configured to implement the function of the network device is the network device.

The technical solutions provided in embodiments of this application may be applied to the fourth generation (the 4^{th} generation, 4G) mobile communication technology system, for example, a long term evolution (long term evolution, LTE) system, or may be applied to a 5G system, for example, a new radio (NR, New Radio) system, or may be applied to a future communication network.

The technical solutions provided in embodiments of this application may be applied to, for example, a non-terrestrial network (non-terrestrial network, NTN) system. The NTN refers to a network established by using a non-terrestrial communication technology, and may include but is not limited to a network that performs a communication service by using a spectrum resource on a communication platform such as a satellite platform, an unmanned aerial vehicle (unmanned aerial vehicle, UAV) platform, or a high altitude platform station (high altitude platform station, HAPS). For example, the NTN may include but is not limited to a satellite system, a UAV communication system, and a HAPS system. Depending on different altitudes of a satellite (that is, orbital altitudes of the satellite) from the earth surface, the satellite system may be classified into a geostationary orbit (geostationary orbit, GEO) satellite system, a medium earth orbit (medium earth orbit, MEO) satellite system, a low earth orbit (low-earth orbit, LEO) satellite system, and the like.

In the NTN, a network device or some network device functions may be deployed on a satellite to provide a service for a terminal device. Compared with a terrestrial communication network, the NTN has advantages such as wide coverage, long communication distance, high reliability, high flexibility, and high throughput, and the NTN is not affected by a geographical environment, a climate condition, and a natural disaster. Introducing satellites into the 5G NR technology may provide communication services for areas that are difficult to cover by terrestrial networks, such as oceans and forests, improve reliability of 5G communication, for example, providing more stable and higher-quality communication services for trains, airplanes, and users on these transportation means, and may also provide more data transmission resources and support a larger quantity of connections.

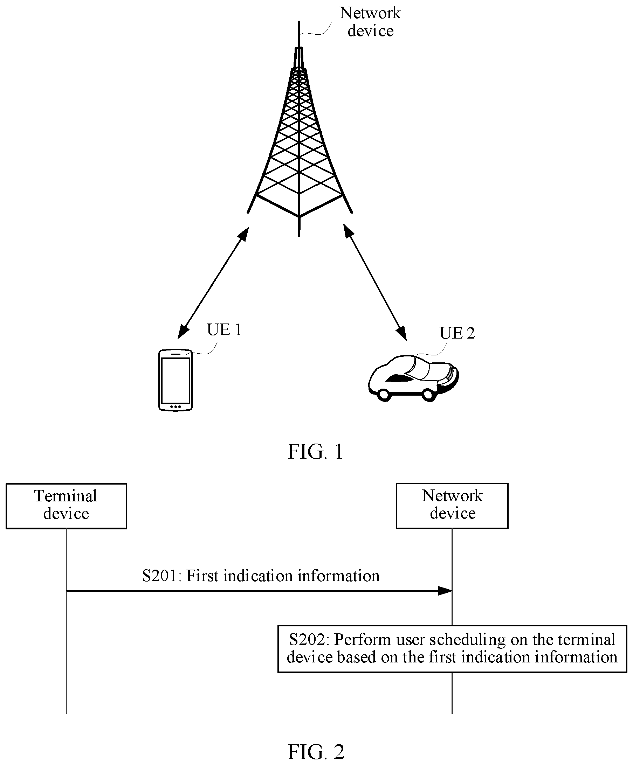

FIG. 1 is a diagram of an architecture of a communication network according to an embodiment of this application. Refer to FIG. 1. The architecture of the communication network shown in FIG. 1 may include a terminal device and a network device. For example, the terminal device in FIG. 1 may be UE 1 and UE 2. The terminal device may send uplink information to the network device on an uplink resource, and the network device may send downlink information to the terminal device on a downlink resource.

When embodiments of this application are applied to an NTN system, the network device shown in FIG. 1 may be a satellite. Due to a long distance and poor link budget of satellite communication, to satisfy requirements on high-throughput services such as broadband video transmission, a terminal device usually uses phased-array narrow beams to align with satellites, to improve a receive gain. For example, a width of a narrow beam ranges from 1° to 3°. When the terminal device is a vehicle-mounted phased-array terminal device and the terminal device moves at a high speed, a bumpy road, vehicle steering, or the like causes a rapid change in a three-axis attitude. Such a change leads to jitter of a beam direction. Because such jitter exists regularly, regular beam tracking is required. A beam tracking technology is a technology for adaptive beamforming. A beam direction is adjusted by continuously monitoring changes in a signal transmission environment and a target location, to maintain an optimal signal transmission effect. The beam tracking technology may include two steps: channel measurement and beam selection. In a channel measurement stage, the terminal device obtains current channel state information (channel state information, CSI) or received power by collecting and analyzing features of signals. In a beam selection stage, the terminal device selects an optimal beam forming direction based on the CSI or the received power, and adjusts a phase and an amplitude of each antenna element.

In an existing cellular system, data transmission is often not performed in a beam tracking process, and data transmission is performed after the beams are stably aligned. However, in a communication scenario between the satellite and the vehicle-mounted phased-array terminal device, jitter is random and occurs frequently, requiring frequent beam tracking. If data transmission is not performed in the beam tracking process, transmission efficiency is low. If data transmission is also performed in the beam tracking process, after the satellite sends downlink data to the terminal device, the terminal device sends uplink feedback information to the satellite. Because channel quality is unstable in the beam tracking process, there is negative impact on user scheduling performed by the satellite based on the uplink feedback information.

For example, after receiving the downlink data sent by the network device, the terminal device may send, to the network device, the uplink feedback information corresponding to the downlink data. For example, the uplink feedback information corresponding to the downlink data may be an acknowledgment (acknowledgment, ACK) character or a negative acknowledgment (negative acknowledgment, NACK) character. The network device may perform adaptive modulation and coding (adaptive modulation and coding, AMC) based on the uplink feedback information. For example, the network device may adjust an adjustment and coding scheme (Modulation and Coding Scheme, MCS) allocated to the terminal device. For example, an MCS index determined by the network device and the uplink feedback information may satisfy the following relationship: ${MCS}_{k + 1} = {MCS}_{k} + μ \left\{\begin{matrix}{target}_{BLER} if ACK \\ {target}_{BLER} - 1 if NACK\end{matrix}\right.$

MCS*ₖ* is an MCS index used by the terminal device at a moment k, MCS_{*k*+1} is an MCS index used by the terminal device at a moment k+1, and target_{BLER} represents a target block error rate (block error rate, BLER), which refers to a percentage of an erroneous block in all sent blocks. For example, target_{BLER} may be set to 0.1. *µ* is an empirical value. For example, *µ* may be set to 1.

However, if the vehicle-mounted phased-array terminal device performs data transmission in the beam tracking process, the channel quality is unstable in the beam tracking process, and the channel quality varies during switching of different beams. In addition, beam tracking is a gradually converging process with high-probability NACK feedback in an early stage of beam tracking, causing a decrease in the MCS index determined by the network device. In addition, in an NTN scenario, a transmission delay is large, and feedback takes effect with a specified lag. When impact of the decrease in the MCS index caused by a large amount of NACK feedback due to unstable beam switching quality comes into effect, beams of the terminal device may have already been aligned or are about to be aligned. In this case, the link quality is good and stable, leading to a problem of low transmission efficiency caused by mismatching between the MCS index and the channel quality.

To resolve the foregoing problems, embodiments of this application provide a communication method. The method provided in embodiments of this application is described below with reference to the accompanying drawings. The methods provided in embodiments of this application may be applied to the network architecture shown in FIG. 1. For example, UE in the method provided in embodiments of this application may be UE 1 or UE 2 in FIG. 1, and a network device in the method provided in embodiments of this application may be the network device in FIG. 1.

FIG. 2 is a flowchart of a communication method according to an embodiment of this application. Refer to FIG. 2. The method includes the following steps.

S201: A terminal device sends first indication information to a network device, and the network device receives the first indication information sent by the terminal device.

In embodiments of this application, when determining that uplink feedback information needs to be sent to the network device, the terminal device may generate the first indication information. The first indication information indicates whether the terminal device is in a beam tracking process.

Optionally, the first indication information may indicate that the terminal device is in the beam tracking process, or the first indication information may indicate that the terminal device is not in the beam tracking process. For example, the first indication information may include a first field, and the first field occupies one bit. When a value of the first field is 1, the first indication information indicates that the terminal device is in the beam tracking process. When the value of the first field is 0, the first indication information indicates that the terminal device is not in the beam tracking process.

It should be noted that in embodiments of this application, the first indication information may further be understood as indicating a type of uplink feedback. Optionally, the type of uplink feedback may include uplink feedback during data transmission, and uplink feedback during simultaneous data transmission and beam tracking. For example, the first indication information may include a first field, and the first field occupies one bit. When a value of the first field is 0, the first indication information indicates that the type of uplink feedback is the uplink feedback during simultaneous data transmission and beam tracking. When the value of the first field is 1, the first indication information indicates that the type of uplink feedback is the uplink feedback during data transmission.

In some embodiments, the first indication information may further indicate a beam tracking stage that the terminal device is in. In an implementation, a beam tracking stage that the terminal device is possibly in may be preset. For example, the beam tracking stage that the terminal device is possibly in may include: an initial stage of beam tracking, an intermediate stage of beam tracking, and a final stage of beam tracking. It may be understood that the beam tracking is a gradually converging process. When the terminal device is in the initial stage of beam tracking, beam direction accuracy is low, and channel quality is poor. However, as the beam tracking progresses, in the intermediate stage and the final stage of beam tracking, the beam direction accuracy is improved, and the channel quality is enhanced. The terminal device may indicate, in the first indication information, the beam tracking stage that the terminal device is in, so that the network device can refer to, during user scheduling, the beam tracking stage that the terminal device is in, to improve accuracy of user scheduling.

For example, the first indication information may include a first field, and the first field occupies two bits. When a value of the first field is 00, the first indication information indicates that the terminal device is in the initial stage of beam tracking. When the value of the first field is 01, the first indication information indicates that the terminal device is in the intermediate stage of beam tracking. When the value of the first field is 10, the first indication information indicates that the terminal device is in the final stage of beam tracking. When the value of the first field is 11, the first indication information indicates that the terminal device is not in the beam tracking process or that beam tracking of the terminal device has converged, and that the terminal device is in a data transmission process.

It should be noted that, that the first indication information indicates the beam tracking stage that the terminal device is in may also be understood as meaning that the first indication information indicates the type of uplink feedback. Optionally, the type of uplink feedback may include the uplink feedback during data transmission, uplink feedback during simultaneous data transmission and initial stage of beam tracking, uplink feedback during simultaneous data transmission and intermediate stage of beam tracking, and uplink feedback during simultaneous data transmission and final stage of beam tracking. For example, the first indication information may include a first field, and the first field occupies two bits. When a value of the first field is 00, the first indication information indicates that the type of uplink feedback is the uplink feedback during simultaneous data transmission and initial stage of beam tracking. When the value of the first field is 01, the first indication information indicates that the type of uplink feedback is the uplink feedback during simultaneous data transmission and intermediate stage of beam tracking. When the value of the first field is 10, the first indication information indicates that the type of uplink feedback is the uplink feedback during simultaneous data transmission and final stage of beam tracking. When the value of the first field is 11, the first indication information indicates that the type of uplink feedback is the uplink feedback during data transmission.

In addition, it should be noted that in the foregoing embodiments of this application, that the first indication information includes the first field and a quantity of bits occupied by the first field is merely an example rather than a limitation. In a specific implementation, the first indication information may further include a plurality of fields to indicate whether the terminal device is in the beam tracking process and the beam tracking stage that the terminal device is in. For example, the first indication information may include the first field and a second field. The first field indicates whether the terminal device is in the beam tracking process, and the second field indicates the beam tracking stage that the terminal device is in. A quantity of bits occupied by each field in the first indication information may alternatively be larger or smaller, or the first indication information may alternatively have another manner of indicating that the terminal is in the beam tracking process. This is not limited in embodiments of this application.

In embodiments of this application, the terminal device may also synchronously send the uplink feedback information while sending the first indication information to the network device. Optionally, the uplink feedback information may include at least one of the following feedback information: uplink feedback, channel measurement information, and channel state information (channel state information, CSI) that correspond to data transmission.

For example, the first indication information and the uplink feedback information may be carried on a same uplink resource or different uplink resources. An uplink resource used to transmit the first indication information may be an uplink resource preconfigured for the terminal device or an uplink resource requested by the terminal device from the network device. The uplink resource may be a resource carried on a physical uplink control channel (physical uplink control channel, PUCCH) or a resource carried on a physical uplink control channel (physical uplink shared channel, PUSCH).

Several manners in which the terminal device sends the first indication information and the uplink feedback information to the network device in embodiments of this application are separately described below.

Manner 1: The terminal device sends the first indication information and the uplink feedback information to the network device on a first resource. The first resource is an uplink resource allocated by the network device to the terminal device before the terminal device sends the first indication information and the uplink feedback information.

The first resource may be an uplink resource requested by the terminal device from the network device. Alternatively, a service scenario in which the first indication information needs to be transmitted is specified in a protocol, and the network device may allocate the first resource to the terminal device in the specified service scenario. During implementation, when the terminal device requests the uplink resource from the network device, the terminal device may send request information to the network device. The request information is used to request the network device to allocate the uplink resource to the terminal device. The network device sends configuration information to the terminal device. The configuration information indicates the first resource allocated by the network device to the terminal device. The terminal device may send the first indication information and the uplink feedback information to the network device on the first resource.

Manner 2: The terminal device sends the first indication information to the network device on a first resource, and sends the uplink feedback information to the network device on a second resource.

The network device may preconfigure the second resource for the terminal device. The second resource is an uplink resource used to transmit the uplink feedback information. The terminal device may request the network device to allocate an uplink resource used to transmit the first indication information. During implementation, the terminal device may send request information to the network device. The request information is used to request the network device to allocate the uplink resource to the terminal device. The network device sends configuration information to the terminal device. The configuration information indicates the first resource allocated by the network device to the terminal device. The terminal device may send the first indication information to the network device on the first resource, and send the uplink feedback information to the network device on the second resource.

Manner 3: The terminal device sends the first indication information and the uplink feedback information to the network device on a first resource. The first resource is a preconfigured uplink resource used to transmit the first indication information and the uplink feedback information.

The network device may preconfigure the first resource and a second resource for the terminal device, where the first resource may be an uplink resource used to transmit the first indication information and the uplink feedback information, and the second resource may be an uplink resource used to transmit only the uplink feedback information. The terminal device may send the first indication information and the uplink feedback information to the network device on the first resource when needing to send the first indication information and the uplink feedback information to the network device.

In Manner 3, before sending the first indication information and the uplink feedback information to the network device, the terminal device may send second indication information to the network device. The second indication information indicates the terminal device to send the first indication information after specified duration following the sending of the second indication information. The second indication information may further indicate a value of the specified duration, or the value of the specified duration may be a value agreed upon in a protocol. After the specified duration following the sending of the second indication information is reached, the terminal device sends the first indication information and the uplink feedback information to the network device on the first resource. According to the manner, the terminal device may notify the network device in advance that the first indication information is to be transmitted, and the first indication information is sent after the specified duration, so that the network device can determine time at which the terminal device needs to occupy the first resource. When the terminal device does not occupy the first resource, the network device may further allocate the unused uplink resource to another user, to reduce a waste of resources.

It should be noted that the foregoing manner in which the terminal device sends the first indication information and the uplink feedback information to the network device is merely an example rather than a limitation. During implementation, the first indication information and the uplink feedback information may be sent to the network device in another manner. This is not limited in embodiments of this application.

S202: The network device performs user scheduling on the terminal device based on the first indication information.

In an optional implementation, that the network device performs user scheduling on the terminal device may include at least one of the following: determining a modulation and coding scheme, allocating a time-frequency resource, allocating a power resource, user pairing in multi-user multiple-input multiple-output (multiple-in multiple-out, MIMO), and precoding in multi-user MIMO.

In embodiments of this application, the network device may determine the modulation and coding scheme based on the first indication information. Optionally, the network device may determine a first MCS index based on the first indication information. The first MCS index is an MCS index used by the network device and the terminal device in next data transmission. Manners in which the network device determines the first MCS index in embodiments of this application are described below.

### Manner 1

When the first indication information indicates that the terminal device is in the beam tracking process, because high-probability NACK feedback may occur due to unstable channel quality in the beam tracking process, the network device may refrain from adjusting an MCS index by using the uplink feedback corresponding to data transmission. During implementation, the network device may determine the first MCS index based on a second MCS index. The second MCS index is an MCS index used in a previous data transmission process of the network device and the terminal device. For example, the second MCS index may be an MCS index used from a data transmission process corresponding to the uplink feedback information sent by the terminal device to a latest data transmission process, or the second MCS index may be an MCS index used in any data transmission process before the data transmission process corresponding to the uplink feedback information.

For example, after the terminal device receives downlink data sent by the network device, the terminal device sends, to the network device, uplink feedback information corresponding to the downlink data. Considering that a transmission delay in an NTN scenario is large, it is assumed that before performing 5th data transmission with the terminal device, the network device receives the uplink feedback information, corresponding to the downlink data, and the first indication information that are sent by the terminal device in 3rd data transmission, and the first indication information indicates that the terminal device is in the beam tracking process. In this case, the network device may determine an MCS index, used in the 5th data transmission, based on an MCS index used in the 3rd data transmission process or an MCS index used in 4th data transmission, and no longer adjusts the MCS index by using the uplink feedback information corresponding to the 3rd data transmission; or the network device determines, based on the first indication information, that the terminal device is in the beam tracking process during the 3rd data transmission, and the network device may determine an MCS index used in the 5th data transmission process based on an MCS index used in a 2nd data transmission process, to further reduce impact of unstable channel quality on the adjustment of the MCS index in the beam tracking process.

It should be noted that embodiments of this application impose no limitation on which data transmission process corresponds to an MCS index that the network device selects as the second MCS index. For example, during implementation, the network device may determine, based on a preset condition, a service scenario, and the like, the second MCS index from MCS indexes used in previous data transmission processes of the network device and the terminal device. This is not limited in embodiments of this application.

Optionally, when the first indication information indicates that the terminal device is not in the beam tracking process, and the terminal device is in a data transmission process, the network device may adjust the MCS index based on the uplink feedback information after receiving the uplink feedback information sent by the terminal device.

For example, the first MCS index determined by the network device according to the communication method provided in embodiments of this application may satisfy the following relationship: ${MCS}_{1} = {MCS}_{2} + T ∗ μ \left\{\begin{matrix}{target}_{BLER} if ACK \\ {target}_{BLER} - 1 if NACK\end{matrix}\right.$

MCS₁ is the first MCS index, MCS₂ is the second MCS index, and T is a value of the first field in the first indication information. When a value of T is 1, the first indication information indicates that the terminal device is not in the beam tracking process. When a value of T is 0, the first indication information indicates that the terminal device is in the beam tracking process. target_{BLER} represents a target block error rate (block error rate, BLER), which refers to a percentage of an erroneous block in all sent blocks. For example, target_{BLER} may be set to 0.1. *µ* is an empirical value. For example, *µ* may be set to 1.

It should be noted that in specific implementation, the network device may alternatively determine the MCS index based on another parameter. The foregoing equation is merely an example rather than a limitation.

### Manner 2

When the first indication information indicates the beam tracking stage that the terminal device is in, because beam tracking is a gradually converging process, and high-probability NACK feedback may occur in the initial stage of beam tracking due to unstable channel quality, the network device may perform user scheduling without using the uplink feedback information, or perform user scheduling by using the uplink feedback information with a lower weight value. By contrast, in the intermediate and the final stages of beam tracking, beam direction accuracy improves and channel quality becomes higher. Therefore, the network device may use the uplink feedback information with a higher weight value when performing user scheduling.

In an optional implementation, the network device may determine, based on the first indication information, a first parameter corresponding to the beam tracking stage that the terminal device is in. The first parameter indicates a confidence level of the uplink feedback information, or the first parameter may be understood as a weight value of the uplink feedback information when the network device performs user scheduling by using the uplink feedback information. The network device may determine the first MCS index based on the first parameter, the second MCS index, and the uplink feedback information.

For example, it is assumed that the first indication information may include the first field, and the first field occupies two bits. When the value of the first field is 00, the first indication information indicates that the terminal device is in the initial stage of beam tracking. In this case, the network device may determine that the first parameter is *P*₀. When the value of the first field is 01, the first indication information indicates that the terminal device is in the intermediate stage of beam tracking. In this case, the network device may determine that the first parameter is *P*₁. When the value of the first field is 10, the first indication information indicates that the terminal device is in the final stage of beam tracking. In this case, the network device may determine that the first parameter is *P*₂. When the value of the first field is 11, the first indication information indicates that the terminal device is not in the beam tracking process or that beam tracking of the terminal device has converged, and that the terminal device is in a data transmission process. In this case, the network device may determine that the first parameter is *P*₃, where *P*₀ < *P*₁ < *P*₂ < *P*₃. For example, the following is an example of values of a set of first parameters: *P*₀ = 0, *P*₁ = 0.5, *P*₂ = 0.75, and *P*₃ = 1.

For example, the first MCS index determined by the network device according to the communication method provided in embodiments of this application may satisfy the following relationship: ${MCS}_{1} = {MCS}_{2} + {P}_{i} ∗ μ \left\{\begin{matrix}{target}_{BLER} if ACK \\ {target}_{BLER} - 1 if NACK\end{matrix}\right.$

MCS₁ is the first MCS index, MCS₂ is the second MCS index, and *Pᵢ* is the first parameter. target_{BLER} represents a target block error rate (block error rate, BLER), which refers to a percentage of an erroneous block in all sent blocks. For example, target_{BLER} may be set to 0.1. *µ* is an empirical value. For example, *µ* may be set to 1.

It should be noted that in specific implementation, the network device may alternatively determine the MCS index based on another parameter. The foregoing equation is merely an example rather than a limitation. In addition, for descriptions of the first MCS index and the second MCS index in Manner 2, refer to the foregoing Manner 1. Repeated parts are not described again.

According to the communication method provided in embodiments of this application, the terminal device may notify, through the first indication information, the network device that the terminal device is in the beam tracking process, so that the network device can perform user scheduling based on the first indication information. This prevents negative impact on the user scheduling that occurs when the network device performs user scheduling based on the uplink feedback information sent by the terminal device in the beam tracking process. Therefore, data transmission efficiency is improved.

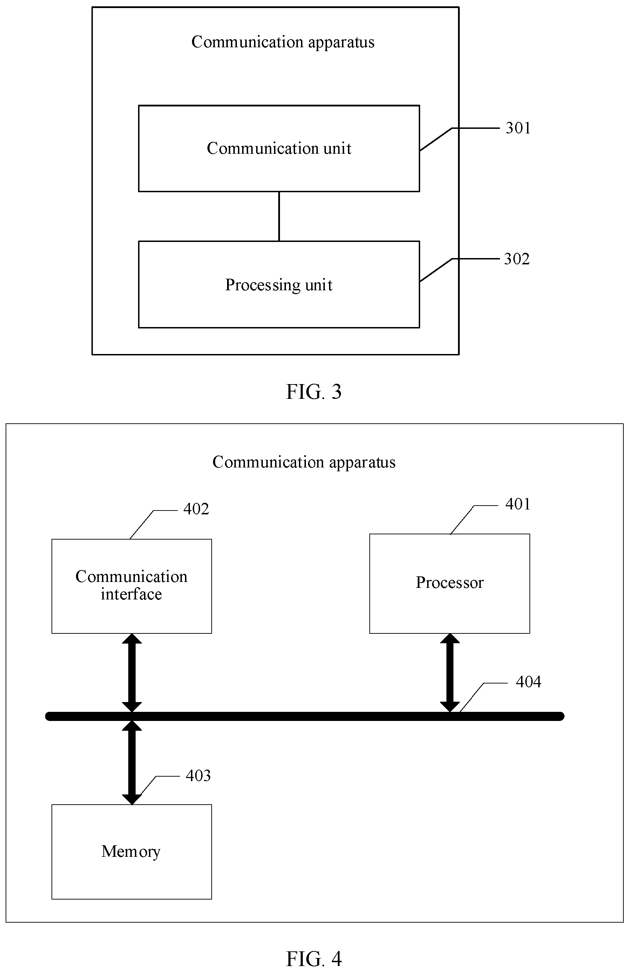

Based on the same technical concept as method embodiments, an embodiment of this application provides a communication apparatus. A structure of the communication apparatus may be shown in FIG. 3, including a communication unit 301 and a processing unit 302.

In an implementation, the communication apparatus may be specifically configured to implement the method performed by the terminal device in the embodiment in FIG. 2. The apparatus may be the terminal device, or may be a chip or a chip set in the terminal device, or a part of the chip that is configured to perform relevant method functions. The processing unit 302 is configured to generate first indication information, where the first indication information indicates that a terminal device is in a beam tracking process; and send the first indication information to a network device through the communication unit 301.

For example, the processing unit 302 is further configured to send uplink feedback information to the network device through the communication unit 301.

For example, the processing unit 302 is specifically configured to send, through the communication unit 301, the first indication information to the network device on a first resource. The first resource is an uplink resource preconfigured by the network device for the terminal device, or the first resource is an uplink resource requested by the terminal device from the network device.

For example, the first indication information and the uplink feedback information are carried on a same uplink resource or different uplink resources.

For example, the processing unit 302 is further configured to send second indication information to the network device through the communication unit 301. The second indication information indicates the terminal device to send the first indication information after specified duration following the sending of the second indication information.

In an implementation, the communication apparatus may be specifically configured to implement the method performed by the network device in the embodiment in FIG. 2. The apparatus may be the network device, or may be a chip or a chip set in the network device, or a part of the chip that is configured to perform relevant method functions. The processing unit 302 is configured to receive, through the communication unit 301, the first indication information sent by the terminal device, where the first indication information indicates that the terminal device is in the beam tracking process; and perform user scheduling on the terminal device based on the first indication information.

For example, the processing unit 302 is specifically configured to determine, based on the first indication information, a modulation and coding scheme corresponding to the terminal device.

For example, the processing unit 302 is specifically configured to determine a first modulation and coding scheme MCS index based on the first indication information. The first MCS index is an MCS index used by the network device and the terminal device in next data transmission.

For example, the processing unit 302 is specifically configured to determine the first MCS index based on a second MCS index. The second MCS index is an MCS index used in a previous data transmission process of the network device and the terminal device.

For example, the first indication information further indicates a beam tracking stage that the terminal device is in. The processing unit 302 is further configured to receive, through the communication unit 301, uplink feedback information sent by the terminal device before performing user scheduling on the terminal device based on the first indication information. The processing unit 302 is specifically configured to: determine, based on the first indication information, a first parameter corresponding to the beam tracking stage that the terminal device is in; and determine the first MCS index based on the first parameter, the second MCS index, and the uplink feedback information, where the second MCS index is an MCS index used in a previous data transmission process of the network device and the terminal device.

For example, the processing unit 302 is specifically configured to receive, through the communication unit 301, the first indication information sent by the terminal device on the first resource, where the first resource is an uplink resource preconfigured by the network device for the terminal device, or the first resource is an uplink resource requested by the terminal device from the network device.

For example, the first indication information and the uplink feedback information are carried on a same uplink resource or different uplink resources.

For example, the processing unit 302 is further configured to receive, through the communication unit 301, second indication information sent by the terminal device. The second indication information indicates the terminal device to send the first indication information after specified duration following the sending of the second indication information.

In embodiments of this application, the module division is an example, and is merely logical function division, and additional division manners may exist during actual implementation. In addition, functional modules in embodiments of this application may be integrated into one processor, or may exist alone physically, or two or more modules may be integrated into one module. The integrated module may be implemented in a form of hardware, or may be implemented in a form of a software function module. It may be understood that for functions or implementations of modules in embodiments of this application, further refer to related descriptions in method embodiments.

In a possible manner, a communication apparatus may be shown in FIG. 4. The apparatus may be a communication device or a chip in the communication device. The communication device may be the terminal device in the foregoing embodiments, or may be the network device in the foregoing embodiments. The apparatus includes a processor 401 and a communication interface 402, and may further include a memory 403. The processing unit 302 may be the processor 401. The communication unit 301 may be the communication interface 402. Optionally, the processor 401 and the memory 403 may also be integrated together.

The processor 401 may be a CPU, a digital processing unit, or the like. The communication interface 402 may be a transceiver, or may be an interface circuit such as a transceiver circuit, or may be a transceiver chip, or the like. The apparatus further includes the memory 403, configured to store a program to be executed by the processor 401. The memory 403 may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory 403 is any other medium that can be configured to carry or store desired program code in a form of instructions or a data structure and that can be accessed by a computer, but is not limited thereto.

The processor 401 is configured to execute the program code stored in the memory 403, and is specifically configured to perform an action of the processing unit 302. Details are not described herein again in this application. The communication interface 402 is specifically configured to perform an action of the communication unit 301. Details are not described herein again in this application.

In embodiments of this application, a specific connection medium between the communication interface 402, the processor 401, and the memory 403 is not limited. In embodiments of this application, in FIG. 4, the memory 403, the processor 401, and the communication interface 402 are connected through a bus 404. The bus is represented by a thick line in FIG. 4. A manner of connection between other components is merely an example for description, and is not limited thereto. The bus may be classified as an address bus, a data bus, a control bus, and the like. For ease of representation, only one thick line is used for representing the bus in FIG. 4, but this does not mean that only one bus or only one type of bus is provided.

An embodiment of the present invention further provides a computer-readable storage medium, configured to store computer software instructions that need to be executed for execution of the foregoing processor, and the computer-readable storage medium includes a program that needs to be executed for execution of the foregoing processor.

An embodiment of this application further provides a communication system, including a communication apparatus configured to implement the terminal device function in the embodiment in FIG. 2 and a communication apparatus configured to implement the network device function in the embodiment in FIG. 2.

A person skilled in the art should understand that embodiments of this application may be provided as a method, a system, or a computer program product. Therefore, this application may use a form of a full hardware embodiment, a full software embodiment, or an embodiment combining software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or block in the flowcharts and/or the block diagrams and a combination of procedures and/or blocks in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing functions specified in one or more procedures in the flowcharts and/or in one or more blocks in the block diagrams.

These computer program instructions may also be stored in a computer-readable memory that can direct the computer or the another programmable data processing device to operate in a specific manner, so that the instructions stored in the computer-readable memory generate a product that includes an instruction apparatus. The instruction apparatus implements functions specified in one or more procedures in the flowcharts and/or in one or more blocks in the block diagrams.

These computer program instructions may also be loaded onto a computer or other programmable data processing devices, so that a series of operating steps are performed on the computer or another programmable device to generate a computer-implemented process, and the instructions executed on the computer or the another programmable device provide steps for implementing the functions specified in one or more procedures of the flowchart and/or one or more blocks of the block diagram.

It is clear that a person skilled in the art may make various modifications and variations to this application without departing from the protection scope of this application. In this way, if these modifications and variations made to this application fall within the scope of the claims of this application and their equivalent technologies, this application is also intended to include these modifications and variations.

## Claims

1. A communication method, applied to a terminal device, wherein the method comprises:
generating first indication information, wherein the first indication information indicates that the terminal device is in a beam tracking process; and
sending the first indication information to the network device.

2. The method according to claim 1, wherein the first indication information further indicates a beam tracking stage that the terminal device is in.

3. The method according to claim 1 or 2, wherein the method further comprises:
sending uplink feedback information to the network device.

4. The method according to any one of claims 1 to 3, wherein the sending the first indication information to the network device comprises:
sending the first indication information to the network device on a first resource, wherein the first resource is an uplink resource preconfigured by the network device for the terminal device, or the first resource is an uplink resource requested by the terminal device from the network device.

5. The method according to claim 3, wherein the first indication information and the uplink feedback information are carried on a same uplink resource or different uplink resources.

6. The method according to any one of claims 1 to 5, wherein the method further comprises:
sending second indication information to the network device, wherein the second indication information indicates the terminal device to send the first indication information after specified duration following the sending of the second indication information.

7. A communication method, applied to a network device, wherein the method comprises:
receiving first indication information sent by a terminal device, wherein the first indication information indicates that the terminal device is in a beam tracking process; and
performing user scheduling on the terminal device based on the first indication information.

8. The method according to claim 7, wherein the performing user scheduling on the terminal device based on the first indication information comprises:
determining, based on the first indication information, a modulation and coding scheme corresponding to the terminal device.

9. The method according to claim 8, wherein the determining, based on the first indication information, the modulation and coding scheme corresponding to the terminal device comprises:
determining a first modulation and coding scheme MCS index based on the first indication information, wherein the first MCS index is an MCS index used by the network device and the terminal device in next data transmission.

10. The method according to claim 9, wherein the determining the first modulation and coding scheme MCS index based on the first indication information comprises:
determining the first MCS index based on a second MCS index, wherein the second MCS index is an MCS index used in a previous data transmission process of the network device and the terminal device.

11. The method according to claim 9, wherein the first indication information further indicates a beam tracking stage that the terminal device is in;
before the performing user scheduling on the terminal device based on the first indication information, the method further comprises:
receiving uplink feedback information sent by the terminal device; and
the determining the first modulation and coding scheme MCS index based on the first indication information comprises:
determining, based on the first indication information, a first parameter corresponding to the beam tracking stage that the terminal device is in; and determining the first MCS index based on the first parameter, a second MCS index, and the uplink feedback information, wherein
the second MCS index is an MCS index used in a previous data transmission process of the network device and the terminal device.

12. The method according to claim 11, wherein the first parameter indicates a confidence level of the uplink feedback information, or the first parameter indicates a weight value of the uplink feedback information when the network device performs user scheduling by using the uplink feedback information.

13. The method according to any one of claims 7 to 12, wherein the receiving the first indication information sent by the terminal device comprises:
receiving the first indication information sent by the terminal device on a first resource, wherein
the first resource is an uplink resource preconfigured by the network device for the terminal device, or the first resource is an uplink resource requested by the terminal device from the network device.

14. The method according to claim 11, wherein the first indication information and the uplink feedback information are carried on a same uplink resource or different uplink resources.

15. The method according to any one of claims 7 to 14, wherein the method further comprises:
receiving second indication information sent by the terminal device, wherein the second indication information indicates the terminal device to send the first indication information after specified duration following the sending of the second indication information.

16. A communication apparatus, comprising a unit or a module configured to perform the method according to any one of claims 1 to 6, or comprising a unit or a module configured to perform the method according to any one of claims 7 to 15.

17. A communication apparatus, wherein the apparatus comprises a processor and a memory, and the processor is coupled to the memory;
the memory is configured to store a program or instructions; and
the processor is configured to invoke the program or the instructions, causing the communication apparatus to perform the method according to any one of claims 1 to 6, or to perform the method according to any one of claims 7 to 15.

18. A computer-readable storage medium, wherein the storage medium stores a computer program or instructions, and when the computer program or the instructions are executed by a communication apparatus, the method according to any one of claims 1 to 6 is implemented, or the method according to any one of claims 7 to 15 is implemented.

19. A computer program product, wherein the computer program product comprises a computer program or instructions, and when the computer program or the instructions are run on a communication apparatus, the method according to any one of claims 1 to 6 is performed, or the method according to any one of claims 7 to 15 is performed.

20. A chip, wherein the chip is configured to read a computer program stored in a memory, to perform the method according to any one of claims 1 to 6, or to perform the method according to any one of claims 7 to 15.
